# EUROPÄISCHE PATENTANMELDUNG

(11) **EP 3 974 804 A1**
(43) Veröffentlichungstag der Anmeldung: **30.03.2022**
(21) Anmeldenummer: 21194325.3
(22) Anmeldetag: 01.09.2021
(51) Int. Cl.: G01N 15/06, G01N 1/22, B01L 3/00, G01N 21/85, G01N 21/94, G01N 15/00, G01N 1/28

(54) **VERFAHREN ZUR ERFASSUNG DER KONZENTRATION VON ORGANISCHEN PARTIKELN IN DER LUFT SOWIE VORRICHTUNG HIERFÜR**

(30) Priorität: 23.09.2020 DE 102020124740
(71) Anmelder: ebm-papst neo GmbH & Co. KG, 74673 Mulfingen (DE)
(72) Erfinder: WYSTUP, Ralph, 74653 Künzelsau (DE); WYSTUP, Frederik, 74632 Neuenstein (DE)
(74) Vertreter: Staeger & Sperling Partnerschaftsgesellschaft mbB

(57) **Zusammenfassung**

Die Erfindung betrifft ein Verfahren zur Erfassung einer Konzentration von organischen Partikeln (14), insbesondere Viren, mit einem bestimmten Zieldurchmesser in Luft (10), welche organische und/oder anorganische Aerosolpartikeln umfasst, wobei in der Luft (10) enthaltene Aerosolpartikel in einer Flüssigkeit (40) gebunden werden, so dass diese als Partikel in der Flüssigkeit (40) enthalten sind, wobei die Flüssigkeit (40) mit den darin enthaltenen Partikeln in einer Messkammer (30) mit einem die organischen Partikel fragmentierenden zweiten Licht (B) und/oder mit einem die organischen Partikel fragmentierenden Ultraschall (C) beaufschlagt werden, so dass die organischen Partikel in der Flüssigkeit (40) fragmentiert werden, wobei vor dem Fragmentieren der organischen Partikel eine erste Lichtstreuung eines ersten Lichts (A) und nach dem Fragmentieren der organischen Partikel eine zweite Lichtstreuung des ersten Lichts (A) an der Flüssigkeit (40) ermittelt und aus einer Differenz der ersten Lichtstreuung und der zweiten Lichtstreuungen die Konzentration der organischen Partikel (14) in der Flüssigkeit (40) und somit in der Luft bestimmt wird.

## Beschreibung

Die Erfindung betrifft ein Verfahren zur Erfassung der Konzentration von organischen Partikeln mit einem bestimmten Zieldurchmesser in der Luft sowie einen Sensor bzw. eine Vorrichtung zur Erfassung der Konzentration von organischen Partikeln mit einem bestimmten Zieldurchmesser in der Luft.

Es gibt eine Vielzahl von Krankheiten bzw. Krankheitserregern und insbesondere krankheitsauslösenden Viren, welche sich über die Luft und insbesondere über Aerosole verbreiten und in der Luft somit als Aerosolpartikel vorliegen. Daher ist es wünschenswert, solche Viren in der Luft detektieren sowie ihre Konzentration in der Luft und somit eine eventuelle Ansteckungsgefahr bestimmen zu können.

Für eine erste Einschätzung, ob Krankheitserreger in der Luft vorhanden sind, sowie eine Einschätzung der Gefahr, welche von den potentiell vorhandenen Krankheitserregern ausgeht, ist es zunächst nicht nötig zu wissen, um welche Krankheitserreger oder Viren es sich genau handelt, sondern nur, dass solche Krankheitserreger mit einer gewissen Wahrscheinlichkeit und mit bzw. in einer gewissen Konzentration vorhanden sind.

Allerdings ist ein Aerosol ein heterogenes Gemisch (Dispersion) aus festen und/oder flüssigen Schwebeteilchen in einem Gas, z.B. Luft. Die Schwebeteilchen werden Aerosolpartikel genannt, wobei solche Aerosolpartikel beispielsweise Staub, Pollen, Sporen, Bakterien oder Viren sein können, so dass eine einfache Messung der Aerosolpartikel und somit eine Abschätzung, ob Krankheitserreger vorhanden sind, nicht ohne Weiteres möglich ist.

Im Stand der Technik sind zwar grundsätzlich Methoden zur Bestimmung der Konzentration von Viren in der Luft bekannt, diese basieren jedoch überwiegend auf Laborverfahren mit entsprechend langwierigen Analysen, so dass die bekannten Verfahren aufwendig, teuer und vor allem auch zeitintensiv sind. Die bekannten Methoden können daher nicht für eine kurzfristige Warnung vor Krankheitserregern genutzt werden, da die Analyseergebnisse meist schlicht zu spät vorliegen würden.

Zudem sind die bekannten Verfahren meist auf einen einzelnen ganz bestimmten Virus oder allgemein auf einen einzelnen bestimmten Krankheitserreger abgestimmt und oftmals nicht für andere Krankheitserreger anwendbar, so dass mit solchen Verfahren nicht die Konzentration bzw. das Vorhandensein verschiedenster Krankheitserreger in der Luft bestimmt werden kann. Der Erfindung liegt deshalb die Aufgabe zugrunde, die vorgenannten Nachteile zu überwinden und ein Verfahren sowie einen zugehörigen Sensor bzw. eine zugehörige Vorrichtung bereitzustellen, durch welches bzw. durch welche ein Vorhandensein und eine Konzentration von Krankheitserregern und insbesondere Viren in der Luft mit hinreichender Wahrscheinlichkeit detektiert werden können.

Diese Aufgabe wird durch die Merkmalskombination gemäß Patentanspruch 1 gelöst.

Der Grundgedanke der Erfindung ist es, ein Verfahren bereitzustellen, durch welches in einer Probe der Luft Partikel mit einem bestimmten Zieldurchmesser durch die Bestrahlung mit einem auf diese Partikel eingestellten Licht und/oder Ultraschall fragmentiert bzw. zerkleinert werden, wobei durch Messungen der Lichtstreuung von Licht an der Probe ermittelt wird, wie hoch die Konzentration der fragmentierten bzw. zerkleinerten Partikel in der Probe ist, woraus die Konzentration der Partikel mit dem Zieldurchmesser in der Luft bestimmt wird.

Dabei entsprechen die Partikel mit dem bestimmten Zieldurchmesser den potentiellen Krankheitserregern, so dass der Zieldurchmesser vorzugsweise entsprechend den zu detektierenden Krankheitserregern gewählt wird und wobei das Licht insbesondere bezüglicher seiner Wellenlänge, Intensität und/oder seiner Pulsung so eingestellt wird, dass die Partikel mit dem bestimmten Zieldurchmesser zu einer die Partikel zerkleinernden bzw. fragmentierenden Schwingung angeregt werden, durch welche die Partikel mit dem bestimmten Zieldurchmesser im Vergleich zu Partikeln mit anderen Durchmessern vorzugweise überproportional zerstört bzw. fragmentiert also zerkleinert werden.

Erfindungsgemäß wird ein Verfahren zur Erfassung einer Konzentration von organischen Partikeln, insbesondere Viren, mit einem bestimmten Zieldurchmesser in Luft, welche organische und/oder anorganische Aerosolpartikein umfasst, vorgeschlagen. Hierfür werden zunächst in der Luft und vorzugsweise in einem vorbestimmten Luftvolumen der Luft enthaltene Aerosolpartikel in einer Flüssigkeit gebunden, so dass diese als Partikel in der Flüssigkeit enthalten sind. Anschließend wird die Flüssigkeit mit den darin enthaltenen Partikeln in einer Messkammer mit einem die organischen Partikel fragmentierenden zweiten Licht und/oder mit einem die organischen Partikel fragmentierenden Ultraschall beaufschlagt, so dass die organischen Partikel in der Flüssigkeit fragmentiert, also zerkleinert werden, wodurch sich das Lichtstreuungsverhalten der Flüssigkeit bzw. der in der Flüssigkeit gebundenen Partikel ändert. Vor dem Fragmentieren der organischen Partikel wird eine erste Lichtstreuung eines ersten Lichts und nach dem Fragmentieren der organischen Partikel eine zweite Lichtstreuung des ersten Lichts an der Flüssigkeit ermittelt, welche sich aufgrund der Fragmentierung potentiell vorhandener organischer Partikel verändern kann. Aus einer Differenz bzw. aus einem Vergleich der ersten Lichtstreuung und der zweiten Lichtstreuungen wird dann die Konzentration der organischen Partikel in der Flüssigkeit und somit in der Luft bzw. in dem vorbestimmten Luftvolumen, aus welchem die Partikel in die Flüssigkeit überführt wurden, bestimmt.

Ein Verfahren, welches ebenfalls auf einer Fragmentierung von Partikeln und einer Differenzmessung basiert und zur Erfassung einer Konzentration von organischen Partikeln in der Luft dient, jedoch abweichend ist und auch eine abweichend aufgebaute Vorrichtung lehrt ist zudem aus der deutschen Anmeldung mit dem Aktenzeichen DE 10 2020 120 199.0 bekannt. Die gesamte Offenbarung der genannten deutschen Anmeldung, welche auf die Anmelderin der vorliegenden Anmeldung zurückgeht, wird hiermit durch Bezugnahme in die vorliegende Anmeldung aufgenommen.

Die organischen Partikel, wie beispielsweise Viren, stellen allgemein einen Körper dar, welcher in Schwingung versetzt werden kann, wobei man sich hierbei vereinfacht einen Körper mit kugeliger bzw. sphärischer Hülle vorstellen kann. Schwingt der Partikel stark genug, führt das zu einem Auseinanderbrechen dieser Hülle bzw. des Partikels, wodurch der Krankheitserreger deaktiviert werden kann und der Partikel in kleinere Teile "zerbricht" bzw. fragmentiert wird. Das Schwingen bzw. die Stärke des Schwingens ist dabei von der Wellenlänge des die Schwingung anregenden Lichts und der Intensität des Lichts sowie von einer Bestrahlungsdauer bzw. einer Pulsung abhängig. Bezüglich einer Beaufschlagung mit Ultraschall ist die Schwingung insbesondere von der Frequenz des Ultraschalls abhängig, welche ebenfalls zu einer die Partikel fragmentierenden Schwingung führen kann. Durch die Einstellung der Wellenlänge des Lichts und/oder Frequenz des Ultraschalls auf einen durch die jeweilige Art von Partikel bestimmten und von dessen Durchmesser abhängigen Resonanzbereich, kann ein solcher Effekt verstärkt bzw. bereits mit einem vergleichsweise niedrigem Energieeinsatz erreicht werden, da weniger Energie aufgewendet werden muss, um die Partikel zu "zerstören" bzw. zu zerbrechen. Ein mehrere Teile umfassender zerstörter Partikel, der zuvor einen Durchmesser entsprechend dem Zieldurchmesser aufgewiesen hat, besitzt im Vergleich zu dem ganzen Partikel veränderte Lichtstreuungseigenschaften, da das Licht nicht mehr von einem einzelnen Partikel sondern von dessen kleineren Einzelteilen bzw. Fragmenten gestreut wird.

Insbesondere ist hierbei vorgesehen, dass das Fragmentieren der organischen Partikel sowie das Ermitteln der ersten Lichtstreuungen und der zweiten Lichtstreuung zeitlich zueinander versetzt in einer einzigen Messkammer durchgeführt werden, so dass ein einfach Aufbau der dafür verwendeten Vorrichtung realisiert werden kann.

Besonders vorteilhaft ist eine Variante des Verfahrens, welches die folgenden Schritte in der folgenden Reihenfolge aufweist:
a) Binden von in Luft enthaltenen Aerosolpartikeln in der vorzugsweise wässrigen Flüssigkeit, so dass die Flüssigkeit die zuvor in der Luft enthaltenen Aerosolpartikel als Partikel enthält, vorzugsweise handelt es sich dadurch bei der Flüssigkeit um eine kolloidale Lösung bzw. eine kolloidale Suspension;
b) Leiten der Flüssigkeit in die Messkammer, welche mit einem von einer Lichtquelle emittierten Licht beaufschlagbar ist, wobei das Leiten der Flüssigkeit insbesondere über einen dafür vorgesehenen Strömungskanal oder ein Rohrsystem realisierbar ist;
c) Beaufschlagen der Flüssigkeit in der Messkammer mit dem ersten Licht erster Intensität und erster Wellenlänge, wobei die erste Intensität und die erste Wellenlänge derart gewählt werden, dass durch das erste Licht keine bzw. im Wesentlichen keine organischen Partikel fragmentiert werden;
d) Bestimmen der ersten Lichtstreuung des ersten Lichts an der Flüssigkeit in der Messkammer, wobei sich die Lichtstreuung des ersten Lichts an den Partikeln in der Flüssigkeit vorzugsweise durch den Tyndall-Effekt ergibt, welcher auch als Rayleigh-Effekt bezeichnet wird und welcher entsprechend gemessen werden kann;
e) Beaufschlagen der Flüssigkeit in der Messkammer mit dem zweiten Licht zweiter Intensität und zweiter Wellenlänge, wobei die zweite Intensität und die zweite Wellenlänge derart gewählt werden, dass durch das zweite Licht die organischen Partikel fragmentiert werden, und/oder Beaufschlagen der Flüssigkeit in der Messkammer mit Ultraschall, wobei eine Frequenz des Ultraschalls derart gewählt wird, dass die organischen Partikel fragmentiert werden, wobei die Frequenz des Ultraschalls vorzugsweise so gewählt wird, dass im wesentlichen ausschließlich die Partikel mit dem Zieldurchmesser fragmentiert werden und wobei ferner sowohl der Ultraschall als auch das zweite Licht gepulst sein kann;
f) Beaufschlagen der Flüssigkeit in der Messkammer mit dem ersten Licht, so dass sich durch die nachfolgende Bestimmung der zweiten Lichtstreuung vergleichbare Messergebnisse bestimmen lassen;
g) Bestimmen der zweiten Lichtstreuung des ersten Lichts an der Flüssigkeit in der Messkammer, wobei diese analog zu der ersten Lichtstreuung bestimmt wird;
h) Bestimmung der Differenz zwischen der ersten Lichtstreuung und der zweiten Lichtstreuung sowie Bestimmen der Konzentration der organischen Partikel in der Flüssigkeit aus der Differenz der ersten Lichtstreuung und der zweiten Lichtstreuung.

Grundsätzlich ist es hierbei nicht zwingend notwendig den Durchmesser der Partikel vor oder nach der Fragmentierung in der Flüssigkeit zu bestimmen, da es ausreichend ist, zu wissen, wie stark sich die Lichtstreuung ändert, da hieraus bereits ein Rückschluss auf die Konzentration bzw. das generelle Vorhandensein der organischen Partikel mit dem Zieldurchmesser in der Flüssigkeit bzw. der Luft gezogen werden kann.

Wie zuvor bereits angedeutet, ist es besonders vorteilhaft, wenn die Wellenlänge und die Intensität des zweiten Lichts derart eingestellt oder gewählt werden, dass die Wellenlänge in einem eine Schwingung der organischen Partikel anregendem Bereich und vorzugsweise in einem Resonanzbereich liegt, so dass die organischen Partikel mit dem Zieldurchmesser in der Flüssigkeit in Schwingung versetzt und durch eine vorzugsweise ausreichend starke Schwingung zerkleinert bzw. fragmentiert also in Fragmente zerlegt werden.

Das erste Licht und das zweite Licht ist bei einer vorteilhaften Weiterbildung zudem jeweils ein Laserlicht bzw. ein Laserstrahl, welcher die Messkammer entlang einer ersten Richtung durchstrahlt.

Insbesondere das zweite Licht aber auch das erste Licht kann bezüglich der jeweiligen Wellenlänge im UVC-Bereich liegen, so dass es sich bei der Verwendung eines Lasers als Lichtquelle um einen UVC-Laser handeln kann.

Die erste Lichtstreuung und die zweite Lichtstreuung werden zudem vorzugsweise orthogonal zu der ersten Richtung durch einen optischen Sensor erfasst, wobei der optische Sensor beispielsweise ein Kamerasystem zur Erfassung eines durch den Tyndall-Effekt an der Flüssigkeit gestreuten Lichtes ist.

Die Messkammer kann entsprechend abschnittsweise und zusammen mit dem optischen Sensor als ein Nephelometer und weiter vorzugsweise als ein Nephelometer mit einem Laser als Lichtquelle zur Messung der Lichtstreuung ausgebildet sein.

Die erste und die zweite Lichtstreuung sowie dazwischen die Fragmentierung der Partikel sollte vorzugsweise an derselben Probe bzw. an der selben Flüssigkeit durchgeführt werden, um dadurch vergleichbare Ergebnisse erhalten zu können. Eine vorteilhafte Variante sieht daher zudem vor, dass eine insbesondere durch eine dafür vorgesehene Vorrichtung antreibbare Strömung der Flüssigkeit durch die Messkammer steuerbar ist. Die Strömung wird während der Fragmentierung und der Ermittlung der ersten und zweiten Lichtstreuung derart gesteuert, dass die Flüssigkeit in der Messkammer strömungslos ist und die Fragmentierung und die Ermittlung der ersten und der zweiten Lichtstreuung entsprechend an derselben Probe bzw. an derselben Flüssigkeit durchgeführt wird.

Obgleich die Messungen der ersten und der zweiten Lichtstreuung sowie die Fragmentierung der organischen Partikel zwischen den Messungen der Lichtstreuungen zeitlich versetzt stattfinden, ist das gesamte Verfahren in kurzer Zeit durchführbar, so dass es möglich ist, nahezu in Echtzeit Partikel mit einem bestimmten Zieldurchmesser, bei welchen es sich mit hoher Wahrscheinlichkeit um Viren oder andere Erreger wie Bakterien handelt, bzw. deren Konzentration in der Luft zu messen. Dabei muss nicht ermittelt werden, ob es sich bei den Partikeln tatsächlich um eine bestimmte Art von Partikel, wie beispielsweise einem bestimmten Virus handelt. Vielmehr soll lediglich frühzeitig erkannt und daraufhin vorzugsweise gewarnt werden, ob eine zu hohe Belastung mit möglichen Krankheitserregern vorliegt. Potentielle Erreger bzw. Viren werden hierbei durch ihre Größe von anderen in der Luft vorhandenen Partikeln unterschieden.

Es ist wesentlich, dass die organischen Partikel mit dem Zieldurchmesser, also die potentiellen Krankheitserreger, bei der Bestrahlung mit dem zweiten Licht und/oder bei der Beaufschlagung mit Ultraschall zerkleinert werden bzw. in größerer Zahl zerkleinert werden, so dass sich durch die Fragmentierung eine abweichende Lichtstreuung ergibt.

Bei dem zweiten Licht kann es sich um ein Licht im UV- oder UVC-Bereich handeln, wobei bei ausreichend hoher Intensität auch Licht im sichtbaren Spektrum bzw. Bereich verwendet werden kann.

Vorteilhaft ist ferner, dass die Wellenlänge des zweiten Lichts auf den Partikel bzw. die organischen Partikel mit dem Zieldurchmesser bzw. den Virus angepasst ist, so dass das Licht diesen Partikel zu einer den Partikel zerkleinernden bzw. fragmentierenden Schwingung anregen kann. Zusätzlich muss die Intensität des zweiten Lichts hoch genug sein um eine ausreichend starke Zerstörung bzw. Fragmentierung zu verursachen bzw. ausreichend viele Partikel zu fragmentieren.

Abhängig vom Durchmesser des Partikels mit dem Zieldurchmesser liegt die Wellenlänge des zweiten Lichts beispielsweise in einem Bereich von 100 bis 280 Nanometer und vorzugsweise bei ca. 120 Nanometer, so dass es sich bei dem Licht um UV-Licht oder um UVC-Licht handeln kann.

Eine konkrete auf ein Partikel angepasste Wellenlänge und Intensität sowie eine eventuelle Pulsung des zweiten Lichts kann zuvor durch Versuche ermittelt werden, wobei beim Auftreten neuer Krankheitserreger die entsprechende Wellenlänge, Intensität und sofern gewünscht eine bevorzugte Pulsung durch neue Versuche festgestellt werden kann.

Das Verfahren kann mehrfach unmittelbar hintereinander oder parallel mit verschiedenen Wellenlängen und Intensitäten bzw. betreffend des Ultraschalls mit verschiedenen Frequenzen und entsprechend für Partikel mit verschiedenen Durchmessern durchgeführt werden, wobei dabei die Probe bzw. die Flüssigkeit ausgetauscht werden sollte. Entsprechend können durch eine Aneinanderreihung oder durch ein Parallelisieren mehrerer erfindungsgemäßer Verfahren verschiedene Partikel mit verschiedenen Zieldurchmessern und entsprechend verschiedene Krankheitserreger detektiert werden.

Eine vorteilhafte Weiterbildung des Verfahrens sieht einen weiteren Schritt vor dem Binden der in der Luft enthaltenen Aerosolpartikel in der Flüssigkeit vor:
- Leiten von Luft in einen Größen-Filter, durch welchen vorzugsweise im Wesentlichen alle Aerosolpartikel, die einen Durchmesser größer dem Zieldurchmesser aufweisen, ausgefiltert werden, so dass gefilterte Luft erhalten wird, welche entsprechend vorzugsweise nur Aerosolpartikel mit einem Durchmesser gleich und/oder kleiner dem Zieldurchmesser enthält. Daraus ergibt sich, dass die Flüssigkeit beim Binden der in der Luft enthaltenen Aerosolpartikel in der Flüssigkeit die zuvor in der gefilterten Luft enthaltenen Aerosolpartikel mit einem Durchmesser gleich oder kleiner dem Zieldurchmesser als Partikel enthält.

Durch das Leiten der Luft in den Größen-Filter ergibt sich anschließend eine genauere Ermittlung der Konzentration, da in der Flüssigkeit weniger "störende" Partikel mit einem Durchmesser abweichend von dem Zieldurchmesser vorhanden sind, durch welche die Messergebnisse verfälscht werden können. Ein solcher Größen-Filter kann zudem auch aus mehreren hintereinander angeordneten Filtern bestehen, so dass der Größen-Filter im Wesentlichen eine Filter-Anordnung ist, durch welche sukzessive Partikel mit einem Durchmesser größer dem Zieldurchmesser gefiltert werden können, bevor die verbleibenden Partikel in der Flüssigkeit gebunden werden.

Vorzugsweise ist vorgesehen, dass durch einen solchen Größen-Filter alle Partikel mit einem Durchmesser gleich oder größer 300 Nanometer herausgefiltert werden, so dass in der Flüssigkeit nur noch Partikel mit einem Durchmesser kleiner 300 Nanometer vorhanden sind.

Da in der Luft geladene und/oder ungeladene Partikel vorhanden sind, deren Konzentration abhängig von dem zu detektierenden Krankheitserreger vorzugsweise nicht ermittelt werden soll, sieht eine weitere vorteilhafte Variante vor, dass vor dem Binden der in der Luft enthaltenen Aerosolpartikel in der Flüssigkeit ein weiterer Schritt erfolgt:
- Leiten von Luft in einen Ladungs-Filter, durch welchen Aerosolpartikel, die eine positive Ladung aufweisen, und/oder Aerosolpartikel, die eine negative Ladung aufweisen, und/oder Aerosolpartikel, die ungeladen sind, aus der Luft gefiltert werden, so dass gefilterte Luft erhalten wird, welche vorzugsweise entsprechend nur Aerosolpartikel enthält, welche eine vorbestimmte Ladung aufweisen, die einer durch den zu detektierenden Krankheitserreger bestimmten Ladung entspricht und wobei hierbei als Ladung eine positive Ladung, eine negative Ladung sowie keine Ladung verstanden wird. Daraus folgt, dass die Flüssigkeit beim Binden der in der Luft enthaltenen Aerosolpartikel in der Flüssigkeit im Wesentlichen nur die zuvor in der gefilterten Luft enthaltenen Aerosolpartikel mit einer vorbestimmten Ladung als Partikel enthält.

Zur Realisierung eines solchen Ladungs-Filters kann beispielsweise ein elektrisches Feld verwendet werden, durch welches die geladenen Partikeln aus ihrer Bewegungsbahn ausgelenkt und somit aus dem Luftstrom entfernt werden. Ein derart realisierter Ladungs-Filter kann zudem mit einem oder mehreren Größen-Filtern kombiniert werden.

Um gezielt nur einen Teil aller Aerosolpartikel aus der Luft zu filtern, welche aber die Partikel mit dem Zieldurchmesser umfassen, sieht eine weitere vorteilhafte Verfahrensvariation vor, dass vor dem Binden der in der Luft enthaltenen Aerosolpartikel in der Flüssigkeit ein weiterer Schritt erfolgt:
- Leiten von Luft in ein inhomogenes elektrisches Feld, durch welches polarisierbare Aerosolpartikel polarisiert werden. Ferner ist das inhomogene elektrische Feld bzw. eine dieses Feld erzeugende Vorrichtung ausgebildet, die polarisierten Aerosolpartikel durch den inhomogenen Verlauf des elektrischen Feldes auf eine Sammelvorrichtung zu lenken bzw. aus seiner Bewegungsbahn auszulenken und an der Sammelvorrichtung zu sammeln. Die polarisierten Aerosolpartikel sammeln sich dementsprechend auf bzw. an der Sammelvorrichtung und werden an dieser oder ausgehend von dieser beim Binden der in der Luft enthaltenen Aerosolpartikel in der Flüssigkeit gebunden.

Beispielsweise kann die Sammelvorrichtung entsprechend temperiert sein, so dass die polarisierten Aerosolpartikel an der Sammelvorrichtung kondensieren. Das Leiten der Luft durch das inhomogene elektrische Feld, welches entsprechend im Wesentlichen ein Filtern und Sammeln der polarisierbaren Partikel aus der Luft darstellt, kann mit einem vorgeschaltetem Ladungs-Filter und einem oder mehreren vorgeschaltetem Größen-Filter kombiniert werden.

Sind die Partikel mit dem vorbestimmten Zieldurchmesser nicht polarisierbar, weisen aber eine vorbekannte Ladung auf, kann die Sammelvorrichtung auch als entsprechend entgegengesetzt geladene Fläche ausgeführt sein, welche die Partikel mit dem Zieldurchmesser und der vorbekannten Ladung anzieht. Solche entsprechend entgegengesetzt geladenen und als Sammelvorrichtung vorgesehenen Flächen können ebenfalls beheizt sein.

Vorzugsweise ist vorgesehen, dass die in der Luft enthaltenen Aerosolpartikel beim Binden in der Flüssigkeit durch Bilden eines Kondensats aus der Luft in der Flüssigkeit gebunden werden.

Um die Flüssigkeit bei der Durchführung des Verfahrens bzw. in dem später erläuterten Sensor zielgerichtet fördern zu können, wird die Flüssigkeit entlang des Strömungspfades vorzugsweise durch eine Kapillarwirkung und/oder einen stromabwärtigen Sog angetrieben. Ein solcher Sog bzw. auch eine solche Kapillarwirkung kann beispielsweise durch eine stromabwärtige Verdampfung der Flüssigkeit erzeugt werden, welche strömungstechnisch nach der Messung der Lichtstreuung bzw. nach der Messkammer stattfindet. Vorteilhaft kann hierfür ein Peltierelement verwendet werden, bei welchem eine erste kühle Seite der Kondensation der Flüssigkeit und eine heiße Seite der Verdampfung der Flüssigkeit dient.

Unabhängig davon ob ein Peltierelement oder eine andere Vorrichtung zur Verdampfung verwendet werden, ist zudem vorteilhaft, dass insbesondere in der Flüssigkeit eventuell noch als Partikel vorliegende Krankheitserreger wie Viren bei der Verdampfung durch Denaturierung unschädlich gemacht werden können.

Die Wellenlänge des von der Lichtquelle emittierten Lichts kann einstellbar sein, wobei hierfür beispielsweise eine entsprechende Optik vorgesehen sein kann. Ist die Wellenlänge einstellbar, kann das Licht auf verschiedene Zielgrößen bzw. verschieden große Partikel angepasst werden, so dass auf Basis der einstellbaren Wellenlänge verschiedenste Partikelgrößen und somit verschiedenste potentielle Krankheitserreger detektierbar sind.

In diesem Zusammenhang ist es auch vorteilhaft, wenn der Größen-Filter, beispielsweise durch zu- und wegschalten oder auch durch einen Austausch verschiedener Filterstufen auf verschieden Partikelgrößen einstellbar ist.

Vorteilhaft ist zudem, wenn das Licht bzw. das zweite Licht zur Fragmentierung der Partikel mit dem Zieldurchmesser gemäß einer vorteilhaften Ausführungsform der Erfindung gepulst wird, so dass auf die Partikel mit dem Zieldurchmesser beim Bestrahlen mit dem zweiten Licht ein gepulstes Licht trifft. Das ist auch insbesondere deshalb vorteilhaft, da durch das Licht naturgemäß nicht nur die Partikel mit dem Zieldurchmesser zu einer die Partikel zerstörenden Schwingung angeregt werden können, sondern prinzipiell alle Partikel in den Proben, wobei die Partikel mit dem Zieldurchmesser durch die auf die Partikel mit dem Zieldurchmesser angepasste Wellenlänge vorzugsweise stärker angeregt werden. Erfolgt eine Dauerbestrahlung der Proben bzw. der Probe mit Licht, kann es vorkommen, dass neben den Partikeln mit dem Zieldurchmesser weitere Partikel mit anderen Durchmessern zerstört werden, da auch deren Schwingung durch die andauernde Bestrahlung so stark werden kann, dass auch diese Partikel zerkleinert bzw. zerstört werden. Durch die Pulsung des Lichts bzw. zumindest die Pulsung des zweiten Lichts wird den Partikeln Gelegenheit gegeben sich zu "beruhigen", so dass deren Schwingung abklingen kann und diese weniger häufig zerstört werden. Bei kurzer Bestrahlungsdauer werden aufgrund der auf die Partikel mit Zieldurchmesser eingestellten Wellenlänge mehr Partikel mit dem Zieldurchmesser zerstört als andere Partikel. Beispielsweise sind Licht- bzw. Laserpulse ausreichend, welche jeweils ca. 100 Femtosekunden andauern.

Für eine Bestrahlung der Partikel mit Ultraschall gilt ebenfalls, dass eine Pulsung vorteilhaft sein kann, da sich alle Partikel in den Pausen zwischen den Pulsen beruhigen können und nur die Partikel mit dem Zieldurchmesser zu einer ausreichend starken die Partikel fragmentierenden Schwingung angeregt werden.

Für die Ermittlung der Konzentration bzw. des Anteils der organischen Partikel in der Luft kann zudem erfasst werden, aus welchem Volumen von Luft die in der Probn bzw. die in der Flüssigkeit vorhandenen Partikel gewonnen wurden, so dass mittels der Konzentration in der Probe auf die Konzentration in dem ursprünglichen Volumen rückgeschlossen werden kann.

Die Ermittlung der Konzentration kann hierbei auch unter Anwendung der bayesschen Statistik erfolgen.

Einer weiterer Aspekt der Erfindung betrifft eine Vorrichtung bzw. einen Sensor zur Durchführung des erfindungsgemäßen Verfahrens. Die Vorrichtung umfasst hierfür zumindest einen Vorfilter und jeweils eine Messeinheit sowie jeweils eine Auswerteeinheit. Der Vorfilter ist ausgebildet, organische und/oder anorganische Aerosolpartikeln aufweisende Luft zu der Messeinheit zu leiten, wobei die Messeinheit oder der Vorfilter eine Vorrichtung zum Binden der Aerosolpartikel in einer Flüssigkeit aufweist. Die Messeinheit ist von der Flüssigkeit entlang eines Strömungspfades durchströmbar und die Strömung bzw. eine Strömungsgeschwindigkeit der Flüssigkeit steuerbar. Ferner weist die Messeinheit eine Messkammer und eine Lichtquelle auf, wobei die Lichtquelle ausgebildet ist, zeitlich zueinander versetzt das erste Licht und das zweite Licht mit der jeweiligen Intensität und der jeweiligen Wellenlänge in die Messkammer zu emittieren. Die Messeinheit weist ferner einen optischen Sensor zur Ermittlung der ersten Lichtstreuung und der zweiten Lichtstreuung des ersten Lichts an der Flüssigkeit in der Messkammer auf. Zudem ist die Auswerteeinheit ausgebildet, aus einer Differenz der ersten Lichtstreuung und der zweiten Lichtstreuung bzw. aus einem Vergleich der ersten Lichtstreuung mit der zweiten Lichtstreuung eine Konzentration der organischen Partikel mit dem bestimmten Zieldurchmesser in der Luft bzw. in der Flüssigkeit und davon ausgehend in der Luft zu bestimmen.

Bei der Lichtquelle handelt es sich zudem vorzugsweise um einen Laser und bei dem ersten und zweiten Licht entsprechend jeweils um ein Laserlicht bzw. um einen Laserstrahl.

Ferner kann durch diese Vorrichtung ein Verfahren zur Ermittlung einer Konzentrationsverteilung und/oder eines Bewegungsmusters eines Aerosols mit organischen Partikeln mit einem Zieldurchmesser bzw. der organischen Partikel mit dem Zieldurchmesser in einem Raum durchgeführt werden. Die Vorrichtung weist hierbei eine Vielzahl von Einheiten bzw. Untereinheiten auf, welche jeweils durch einen Vorfilter, eine Messeinheit und eine Auswerteeinheit gebildet werden. Ferner sind die Einheiten nach einem vorbestimmten Muster in dem Raum angeordnet bzw. verteilt. Durch das vorbestimmte Muster sind die Koordinaten bzw. ist die Anordnung der Einheiten bezogen auf den Raum bekannt. Aus den durch die einzelnen Einheiten ermittelbaren Konzentrationen der Partikel mit dem Zieldurchmesser in Zusammenschau mit der Anordnung der jeweiligen Einheiten gemäß dem Muster wird eine Position einer Aerosolwolke im Raum bestimmt, wobei ferner durch zeitlich aufeinanderfolgend ermittelte Positionen der Aerosolwolke ein bisheriger Bewegungspfad und Anhand einer Interpolation ein zukünftiger Bewegungspfad der Aerosolwolke bestimmt wird. Die Interpolation kann hierbei anhand eines neuronalen Netzes oder mittels einer Fluidsimulation durchgeführt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Vorrichtung zur Durchführung des Verfahrens;
- Fig. 2: einen mehrere Filterstufen aufweisenden Vorfilter.

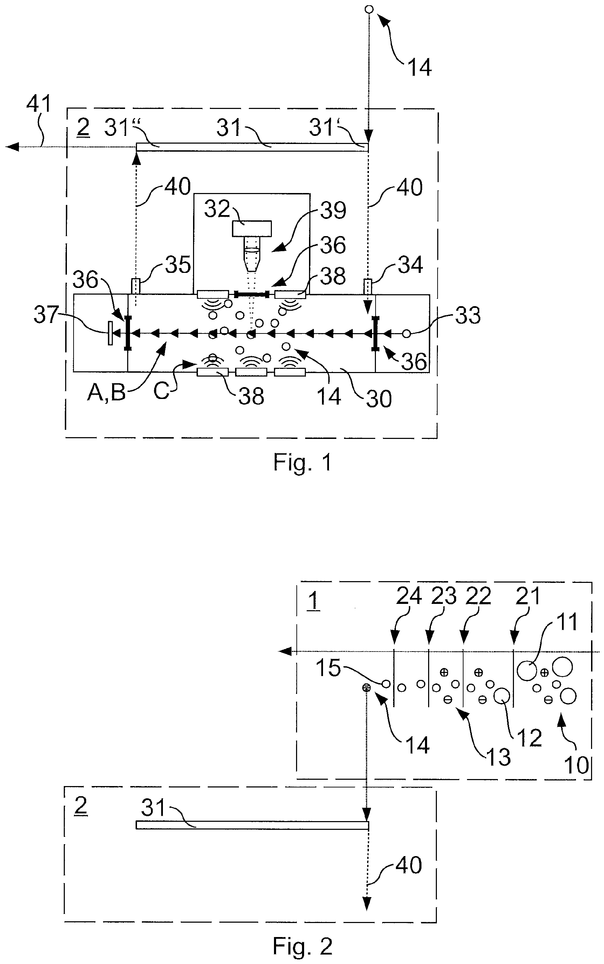

Die Figuren sind beispielhaft schematisch, wobei Figur 2 einen aus mehreren Filterstufen bestehenden Vorfilter 1 zeigt, wie er der in Figur 1 dargestellten Vorrichtung 2 vorgeschalten sein kann.

Das erfindungsgemäße Verfahren sowie der zugehörige erfindungsgemäße Sensor bzw. die zugehörige erfindungsgemäße Vorrichtung, welche schematisch durch Figur 1 illustriert werden, dient der Erfassung von anorganischen und organischen Partikeln bestimmter Durchmesser, wobei bei einem Verfahrensdurchlauf jeweils Partikel 14 mit einem Zieldurchmesser detektiert werden können und dieser Zieldurchmesser im Wesentlichen durch Einstellung der Wellenlänge und der Intensität des durch die Lichtquelle bei dem Fragmentieren der Partikel emittierten Lichts, welches dem zweiten Licht entspricht, sowie einer Anpassung der darauf basierenden Auswertung verändert werden kann.

Hintergrund der Erfindung ist es, Partikel mit diesen Eigenschaften - also mit einem vorbekannten Durchmesser, der innerhalb eines Toleranzbereichs dem Zieldurchmesser entspricht - in ihrer Konzentration zu erfassen und diese gegebenenfalls anzuzeigen bzw. eine Warnmeldung auszugeben.

Das Grundprinzip besteht aus der Differenzmessung der Streufähigkeit der Partikel mit ihren ursprünglichen Eigenschaften, bei welchen also ein Partikel, bei welchem es sich um einen Virus handeln kann, noch nicht zerkleinert wurde, im Vergleich mit der Streufähigkeit der Partikel bzw. deren Partikelfragmente, welche mit dem zweiten Licht bestrahlt und dadurch zerkleinert wurden. Diese Differenz, gibt Aufschluss über die Konzentration der Partikel in der Luft, welche der Messung zu Grunde liegt.

Um gemäß des vorgeschlagenen Verfahrens in der Luft enthaltene Aerosolpartikel in der Flüssigkeit 40 binden zu können, ist eine Sammelvorrichtung 31 vorgesehen, welche gemäß der Figuren 1 und 2 als beispielsweise als ein Peltierelement ausgebildet ist, an dessen kalter Seite 31' die Luft mit den Partikeln kondensieren kann und an dessen heißer Seite 31" die Flüssigkeit 40 wieder verdampft und über abgegebene Luft 41 wieder abgeführt wird. Durch das Verdampfen an der heißen Seite entsteht zudem ein Sog, welcher die Strömung der Flüssigkeit 40 durch den Einlass 34 der Messkammer 30 in die Messkammer 30 und nach dem Verfahren aus dem Auslass 35 aus der Messkammer 30 heraus fördert, wobei der Sog bzw. die Strömung beispielsweise durch ein nicht dargestelltes Ventil steuerbar ist.

Die im Kondensat bzw. in der Flüssigkeit 40 schwimmenden Partikel, bei welchen es sich beispielsweise um den Covid-19 Virus oder einen anderen Erreger handeln kann, gelangen nun vorzugsweise durch eine Kapillarwirkung zu der Messkammer 30 der Messeinheit 2. Der Strom der Flüssigkeit 40 wird hierzu derart gesteuert, dass die Flüssigkeit während der Durchführung des Verfahrens im Wesentlichen keine Strömung hat, also keine Flüssigkeit 40 aus der Messkammer 30 ausströmt und auch keine neue Flüssigkeit 40 in die Messkammer 30 nachströmt.

In der Messkammer 30 wird nun durch die hier als Laser ausgebildete Lichtquelle 33 ein erstes Licht A durch die Messkammer 30 emittiert, welches so gewählt ist, dass die organischen Partikel in der Flüssigkeit 40 nicht fragmentiert werden. Das erste Licht A wird aufgrund des Tyndall-Effektes an den bzw. an allen Partikeln in der Flüssigkeit 40 in der Messkammer 30 gestreut, wobei die Lichtstreuung von dem optischen Sensor 32 gemessen wird. Der optische Sensor 32 ist vorliegend als ein Kamerasystem zur Bildverarbeitung der Tyndall-Streuung mit einem vorgeschalteten Kameratubus 39 ausgebildet, in welchem eine Kameraoptik zur Fokussierung des von dem Kamerasystem aufgenommenen Bildes angeordnet ist. Dabei ist das Kamerasystem bzw. der optische Sensor 32 gegenüber dem Umfeld abgedunkelt und nur über ein lichtdurchlässiges Fenster 36 mit der Messkammer verbunden, wobei das Fenster 36 kein Licht reflektiert bzw. reflektionsfrei ist, so dass die Messung durch den optischen Sensor 32 nicht verfälscht wird.

Auch der Laser bzw. die Lichtquelle 33 ist von der Messkammer 30 mittels eines solchen Fensters 36 getrennt, wobei der Laserstrahl bzw. das erste und zweite Licht A, B auf der gegenüberliegenden Seite der Messkammer 30 wiederum durch ein solches Fenster 36 aus der Messkammer 30 austritt und auf einen Absorber 37 trifft, durch welchen das Licht absorbiert und vorzugsweise auch die Stärke bzw. die Intensität des Lichts gemessen werden kann, was die Regelung der Lichtquelle 33 vereinfacht bzw. erlaubt.

Nachdem die erste Lichtstreuung mittels des optischen Sensors 32 gemessen wurde, erfolgt die Fragmentierung der organischen Partikel in der Flüssigkeit 40, welche durch eine Beaufschlagung der Flüssigkeit 40 mit dem zweiten Licht B und hier zusätzlich durch die Beaufschlagung der Flüssigkeit 40 mit Ultraschall C bewirkt wird. Hierfür sind innerhalb der Messkammer 30 zusätzlich mehrere Ultraschallerzeuger 38 vorgesehen, welche zumindest in dem für die Messung der Lichtstreuung relevanten Bereich Ultraschall C erzeugen und dadurch zu der Fragmentierung der organischen Partikel in der Flüssigkeit 40 beitragen.

Alle Partikel in der Flüssigkeit 40 werden dabei mit dem zweiten Licht B sowie dem Ultraschall C beaufschlagt, wobei durch die Abstimmung der Intensität und Wellenlänge des zweiten Lichts B und der Frequenz des Ultraschalls C in Verbindung mit einer optionalen Pulsung des Ultraschalls C und des zweiten Lichts B insbesondere die organischen Partikel mit dem Zieldurchmesser fragmentiert werden und beispielsweise eventuell noch vorhandene anorganische Partikel oder Partikel mit kleinerem Durchmesser als der Zieldurchmesser nicht.

Nach der Fragmentierung, welche für eine vorbestimmte Zeit durchgeführt werden kann, erfolgt eine zweite Messung der Lichtstreuung, wobei die dabei gemessene zweite Lichtstreuung mit der ersten Lichtstreuung verglichen wird. Aus der Differenz der Lichtstreuungen kann ein Rückschluss gezogen werden, ob und wie viele Partikel fragmentiert wurden und entsprechend wie viele organische Partikel mit dem Zieldurchmesser in der Flüssigkeit 40 vorhanden sind bzw. waren.

Da bekannt ist, aus welcher Menge Luft die Flüssigkeit 40 gewonnen wurde, kann bestimmt werden, welchen Anteil die organischen Partikel mit dem Zieldurchmesser in der Luft hatten und ob dieser Anteil bzw. diese Konzentration einen vorbestimmten Grenzwert überschreitet.

In Figur 2 ist ein zum Sammeln und Reinigen der Luft vorgesehener Vorfilter 1 dargestellt. Es werden eine Vielzahl unterschiedlicher Partikel 11, 12, 13, 14 gesammelt, welche in der Luft 10 enthalten sind. Die Partikel 11, 12, 13, 14, welche sich meist in Flüssigkeitströpfchen, dem Aerosol, befinden, werden hierzu in einer Flüssigkeit 40 gebunden.

Vorliegend ist ein erster Größen-Filter 21 als Grob-Filter vorgesehen, welcher Partikel 11 filtert, welche Wesentlich größer sind als Partikel 14 mit dem Zieldurchmesser. In Strömungsrichtung der Luft 10 folgend ist ein zweiter Größen-Filter 22 als Fein-Filter vorgesehen, welcher Partikel 12 filtert, welche einen Durchmesser größer dem Zieldurchmesser und einen Durchmesser kleiner den durch den ersten Größen-Filter 21 gefilterten Partikel 11 aufweisen. Anschließend ist ein Ladungs-Filter 23 vorgesehen, welcher beispielsweise durch ein gerichtetes elektrisches Feld realisiert ist, durch welchen alle positiv oder negativ geladenen Partikel 13 aus der Luft gefiltert werden, wobei diese bedingt durch den ersten und zweiten Größen-Filter 21, 22 einen Durchmesser gleich oder kleiner dem Zieldurchmesser aufweisen. Abhängig von den Umgebungsbedingungen oder dem Zieldurchmesser des Partikels können auch noch weitere Filter und beispielsweise mehr Größen-Filter vorgesehen sein. Die verbliebenen Partikel werden soweit möglich durch die Vorrichtung 24 polarisiert. Die polarisierten Partikel 14 werden durch die Vorrichtung 24, beispielsweise ein inhomogenes elektrisches Feld auf eine Sammelvorrichtung ausgelenkt und an dieser für die weitere Analyse gesammelt. Die in der Luft verbleibenden Partikel 15 können wieder ausgestoßen werden, da diese für die Analyse nicht von Interesse sind. Bei den so für die weitere Analyse gesammelten Partikel 14 handelt es sich um alle Partikel, welche zuvor durch die verschiedenen Filter bzw. Filterstufen nicht herausgefiltert wurden, so dass neben den organischen Partikeln mit dem Zieldurchmesser, deren Anteil in der Luft bestimmt werden soll, auch weitere Partikel in der Flüssigkeit gebunden werden können. Den Luftstrom durch den Vorfilter 1 bzw. durch die Filter und die Vorrichtung zur Polarisierung kann beispielsweise von einem nicht dargestellten Ventilator angetrieben sein, der einen steten Luftstrom mit einem vorzugsweise bekannten Volumenstrom erzeugt. Durch den ersten und zweiten Größen-Filter 21, 22 werden vorzugsweise alle Partikel ausgefiltert, welche einen Durchmesser größer dem Zieldurchmesser, also größer dem potentiellen Virendurchmesser von beispielsweise 300 nm aufweisen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Erfassung einer Konzentration von organischen Partikeln (14), insbesondere Viren, mit einem bestimmten Zieldurchmesser in Luft (10), welche organische und/oder anorganische Aerosolpartikeln umfasst,
wobei in der Luft (10) enthaltene Aerosolpartikel in einer Flüssigkeit (40) gebunden werden, so dass diese als Partikel in der Flüssigkeit (40) enthalten sind,
wobei die Flüssigkeit (40) mit den darin enthaltenen Partikeln in einer Messkammer (30) mit einem die organischen Partikel fragmentierenden zweiten Licht (B) und/oder mit einem die organischen Partikel fragmentierenden Ultraschall (C) beaufschlagt werden, so dass die organischen Partikel in der Flüssigkeit (40) fragmentiert werden,
wobei vor dem Fragmentieren der organischen Partikel eine erste Lichtstreuung eines ersten Lichts (A) und nach dem Fragmentieren der organischen Partikel eine zweite Lichtstreuung des ersten Lichts (A) an der Flüssigkeit (40) ermittelt und aus einer Differenz der ersten Lichtstreuung und der zweiten Lichtstreuungen die Konzentration der organischen Partikel (14) in der Flüssigkeit (40) und somit in der Luft bestimmt wird.

2. Verfahren nach Anspruch 1,
wobei das Fragmentieren der organischen Partikel sowie das Ermitteln der ersten Lichtstreuungen und der zweiten Lichtstreuung zeitlich zueinander versetzt in einer einzigen Messkammer (30) durchgeführt werden.

3. Verfahren nach Anspruch 1 oder 2,
aufweisend die Schritte in der folgenden Reihenfolge:
a) Binden von in Luft (10) enthaltenen Aerosolpartikeln in der Flüssigkeit (40), so dass die Flüssigkeit (40) die zuvor in der Luft (10) enthaltenen Aerosolpartikel als Partikel enthält;
b) Leiten der Flüssigkeit (40) in die Messkammer (30), welche mit einem von einer Lichtquelle (33) emittierten Licht (A, B) beaufschlagbar ist;
c) Beaufschlagen der Flüssigkeit (40) in der Messkammer (30) mit dem ersten Licht (A) erster Intensität und erster Wellenlänge, wobei die erste Intensität und die erste Wellenlänge derart gewählt werden, dass durch das erste Licht (A) keine organischen Partikel fragmentiert werden;
d) Bestimmen der ersten Lichtstreuung des ersten Lichts (A) an der Flüssigkeit (40) in der Messkammer (30);
e) Beaufschlagen der Flüssigkeit (40) in der Messkammer (30) mit dem zweiten Licht (B) zweiter Intensität und zweiter Wellenlänge, wobei die zweite Intensität und die zweite Wellenlänge derart gewählt werden, dass durch das zweite Licht (B) die organischen Partikel fragmentiert werden, und/oder
Beaufschlagen der Flüssigkeit (40) in der Messkammer (30) mit Ultraschall (C), wobei eine Frequenz des Ultraschalls derart gewählt wird, dass die organischen Partikel fragmentiert werden;
f) Beaufschlagen der Flüssigkeit (40) in der Messkammer (30) mit dem ersten Licht (A);
g) Bestimmen der zweiten Lichtstreuung des ersten Lichts (A) an der Flüssigkeit (40) in der Messkammer (30);
h) Bestimmung der Differenz zwischen der ersten Lichtstreuung und der zweiten Lichtstreuung sowie Bestimmen der Konzentration der organischen Partikel (14) in der Flüssigkeit (40) aus der Differenz der ersten Lichtstreuung und der zweiten Lichtstreuung.

4. Verfahren nach dem vorhergehenden Anspruch,
wobei die Wellenlänge und die Intensität des zweiten Lichts (B) derart eingestellt oder gewählt werden, dass die Wellenlänge in einem eine Schwingung der organischen Partikel (14) anregendem Bereich liegt, so dass die organischen Partikel (14) mit dem Zieldurchmesser in der Flüssigkeit (40) in Schwingung versetzt und zerkleinert werden.

5. Verfahren nach einem der vorhergehenden Ansprüche 3 oder 4,
wobei das erste Licht (A) und das zweite Licht (B) jeweils ein Laserstrahl ist, welcher die Messkammer (30) entlang einer ersten Richtung durchstrahlt.

6. Verfahren nach einem der vorhergehenden Ansprüche,
wobei die erste Lichtstreuung und die zweite Lichtstreuung orthogonal zu der ersten Richtung durch einen optischen Sensor (32) erfasst werden.

7. Verfahren nach dem vorhergehenden Anspruch,
wobei der optische Sensor (32) ein Kamerasystem zur Erfassung eines durch den Tyndall-Effekt an der Flüssigkeit (40) gestreuten Lichtes ist.

8. Verfahren nach einem der vorhergehenden Ansprüche,
wobei eine Strömung der Flüssigkeit (40) durch die Messkammer (30) steuerbar ist und während der Fragmentierung und der Ermittlung der ersten und zweiten Lichtstreuung derart gesteuert wird, dass die Flüssigkeit (40) in der Messkammer (30) strömungslos ist.

9. Verfahren nach einem der vorhergehenden Ansprüche,
vor dem Binden der in der Luft (10) enthaltenen Aerosolpartikel in der Flüssigkeit (40) ferner umfassend den Schritt:
Leiten von Luft in einen Größen-Filter (21, 22), durch welchen Aerosolpartikel (11, 12), die einen Durchmesser größer dem Zieldurchmesser aufweisen, ausgefiltert werden, so dass gefilterte Luft erhalten wird, welche Aerosolpartikel mit einem Durchmesser gleich und/oder kleiner dem Zieldurchmesser enthält, so dass die Flüssigkeit (40) beim Binden der in der Luft (10) enthaltenen Aerosolpartikel in der Flüssigkeit (40) die zuvor in der gefilterten Luft enthaltenen Aerosolpartikel mit einem Durchmesser gleich oder kleiner dem Zieldurchmesser als Partikel enthält.

10. Verfahren nach einem der vorhergehenden Ansprüche,
vor dem Binden der in der Luft (10) enthaltenen Aerosolpartikel in der Flüssigkeit (40) ferner umfassend den Schritt:
Leiten von Luft in einen Ladungs-Filter (23), durch welchen Aerosolpartikel, die eine positive Ladung aufweisen, und/oder Aerosolpartikel, die eine negative Ladung aufweisen, und/oder Aerosolpartikel, die ungeladen sind, aus der Luft (10) gefiltert werden, so dass gefilterte Luft erhalten wird, welche Aerosolpartikel mit einer vorbestimmten Ladung enthält, so dass die Flüssigkeit (40) beim Binden der in der Luft (10) enthaltenen Aerosolpartikel in der Flüssigkeit (40) die zuvor in der gefilterten Luft enthaltenen Aerosolpartikel mit einer vorbestimmten Ladung als Partikel enthält.

11. Verfahren nach einem der vorhergehenden Ansprüche,
vor dem Binden der in der Luft (10) enthaltenen Aerosolpartikel in der Flüssigkeit (40) ferner umfassend den Schritt:
Leiten von Luft (10) in ein inhomogenes elektrisches Feld (24), durch welches polarisierbare Aerosolpartikel polarisiert werden, und welches ausgebildet ist, die polarisierten Aerosolpartikel auf eine Sammelvorrichtung zu lenken,
wobei sich die polarisierten Aerosolpartikel auf der Sammelvorrichtung sammeln und an dieser oder ausgehend von dieser beim Binden der in der Luft (10) enthaltenen Aerosolpartikel in der Flüssigkeit (40) gebunden werden.

12. Verfahren nach einem der vorhergehenden Ansprüche,
wobei die in der Luft (10) enthaltenen Aerosolpartikel beim Binden in der Flüssigkeit (40) durch Bilden eines Kondensats aus der Luft in der Flüssigkeit (40) gebunden werden.

13. Verfahren nach einem der vorhergehenden Ansprüche,
wobei das erste Licht und/oder das zweite Licht (44) beim Bestrahlen der Flüssigkeit (40) gepulst wird.

14. Vorrichtung zur Durchführung des Verfahrens nach einem der vorhergehenden Ansprüche,
umfassend zumindest einen Vorfilter (1) und jeweils eine Messeinheit (2) sowie jeweils eine Auswerteeinheit,
wobei der Vorfilter (1) ausgebildet ist, organische und/oder anorganische Aerosolpartikeln aufweisende Luft (10) zu der Messeinheit (2) zu leiten,
wobei die Messeinheit (2) oder der Vorfilter (1) eine Vorrichtung (31) zum Binden der Aerosolpartikel in einer Flüssigkeit (40) aufweist
wobei die Messeinheit von der Flüssigkeit (40) entlang eines Strömungspfades durchströmbar und die Strömung der Flüssigkeit (40) steuerbar ist,
wobei die Messeinheit (2) eine Messkammer (30) und eine Lichtquelle (33) aufweist,
wobei die Lichtquelle (33) ausgebildet ist, zeitlich zueinander versetzt das erste Licht (A) und das zweite Licht (B) mit der jeweiligen Intensität und der jeweiligen Wellenlänge zu emittieren,
wobei die Messeinheit (2) ferner einen optischen Sensor (32) zur Ermittlung der ersten Lichtstreuung und der zweiten Lichtstreuung des ersten Lichts (A) an der Flüssigkeit (40) in der Messkammer (30) aufweist,
und wobei die Auswerteeinheit ausgebildet ist, aus einer Differenz der ersten Lichtstreuung und der zweiten Lichtstreuung eine Konzentration der organischen Partikel (14) mit dem bestimmten Zieldurchmesser in der Luft (10) zu bestimmen.

15. Verfahren zur Ermittlung einer Konzentrationsverteilung und/oder eines Bewegungsmusters eines Aerosols mit organischen Partikeln mit einem Zieldurchmesser in einem Raum unter Verwendung der Vorrichtung gemäß dem vorhergehenden Anspruch,
wobei die Vorrichtung eine Vielzahl von Einheiten aufweist, welche jeweils durch einen Vorfilter (1), eine Messeinheit (2) und eine Auswerteeinheit gebildet werden und wobei die Einheiten nach einem vorbestimmten Muster in dem Raum angeordnet sind,
wobei aus den durch die einzelnen Einheiten ermittelbaren Konzentrationen der Partikel (14) mit dem Zieldurchmesser in Zusammenschau mit der Anordnung der jeweiligen Einheiten gemäß dem Muster eine Position einer Aerosolwolke im Raum bestimmt wird,
wobei durch zeitlich aufeinanderfolgend ermittelte Positionen der Aerosolwolke ein bisheriger Bewegungspfad und Anhand einer Interpolation ein zukünftiger Bewegungspfad der Aerosolwolke bestimmt wird.
